# EUROPEAN PATENT APPLICATION

(11) **EP 2 257 103 A1**
(43) Date of publication of application: **01.12.2010**
(21) Application number: 09735395.7
(22) Date of filing: 16.04.2009
(51) Int. Cl.: H04W 36/12, H04W 40/20

(54) **A METHOD, SYSTEM AND DEVICE FOR SERVICE PROVIDING**

(30) Priority: 24.04.2008 CN 200810096037
(71) Applicant: Huawei Technologies Co., Ltd., Longgang District, Shenzhen Guangdong 518129 (CN)
(72) Inventor: ZHU, Dongming, Longgang District 518129 Shenzhen (CN); YE, Songhai, Longgang District 518129 Shenzhen (CN); DING, Chunyan, Longgang District 518129 Shenzhen (CN)
(74) Representative: Kreuz, Georg Maria
(86) International application number: PCT/CN2009/071285
(87) International publication number: WO 2009/129725

(57) **Abstract**

A method, system, and device for providing a service in the field of communications technologies are provided. The method includes the following steps. A terminal acquires a network instruction. The terminal initiates a call in a Circuit Switched (CS) domain according to the network instruction. The CS domain provides a service according to the received call from the terminal. The system includes a delivery device, user equipment (UE), and a device for providing a service. The UE includes an acquisition module and a processing module. By providing a network entity with enhanced functions (for example, an enhanced Visit Mobile Switch Center (VMSC) and an enhanced Proxy Call Session Control Function (P-CSCF)), the terminal is capable of providing an emergency call service and a monitoring service for a terminal user when a session is established by using an Internet Protocol (IP) Multimedia Subsystem (IMS) CS Control Protocol (ICCP) signaling.

## Description

The application claims priority to Chinese Patent Application No. 200810096037.3, entitled "METHOD, SYSTEM, AND DEVICE FOR PROVIDING SERVICE", filed with the Chinese Patent Office on April 24, 2008, which is incorporated herein by reference in its entirety.

### FIELD OF THE TECHNOLOGY

The present invention relates to the field of communications technologies, and more particularly, to a method, system, and device for providing a service.

### BACKGROUND OF THE INVENTION

As network technologies develop and become increasingly mature, an Internet Protocol (IP) Multimedia Subsystem (IMS) attracts much attention as a novel multimedia service mode, because the IMS can satisfy the demands for more innovative and diverse multimedia services of current terminal customers. The IMS is regarded as a core technology of the next generation network and is an important mode for realizing differentiated services, such as convergence of mobile and fixed networks and triple fusion that introduces voice, data, and video. The IMS is a subsystem overlaid on an existing Packet Switched (PS) domain in a mobile switching network, where the PS domain is used as a bearer channel for an upper layer control signaling and media transmission and the Session Initiation Protocol (SIP) is introduced as a service control protocol. As the SIP is simple, easily expandable, convenient for media combination, the service control and the bearer (such as media stream data, voice data, and video data) control are separated, so as to provide various multimedia services. The main function entities in the IMS include a Call Session Control Function (CSCF) entity for controlling functions of user registration and session control, an Application Server (AS) for providing various service logic control functions, a Home Subscriber Server (HSS) for managing user subscription data uniformly, and a Media Gateway Control Function/IP Multimedia Media Gateway (MGCF/IM-MGW) for realizing intercommunication with a Circuit Switched (CS) network.

During the evolution from a network to the IMS, a CS domain and an IMS domain might co-exist. The session control signaling between User Equipment (UE) and an IMS CS Control Function (ICCF) is referred to as an IMS CS Control Protocol (ICCP) signaling (or referred to as an I1 signaling for short). It should be noted that: 1) when the UE accesses the IMS through the PS domain, the ICCP signaling can be referred to as an I1-PS signaling, for example, the SIP; 2) when the UE accesses the IMS through the CS domain, the ICCP signaling can be referred to as an I1-CS signaling, which can be Unstructured Supplementary Service Data (USSD), a Short Message Service (SMS) or a Dual Tone Multiple Frequency (DTMF). When the UE accesses the IMS through the CS domain and the PS domain simultaneously, the UE sends an I1-PS (Session Request Invite) message carrying a called number to an opposite end, and at the same time the UE sends a session Setup message to establish a bearer of the session. The two sessions are combined in the ICCF, and the ICCF, taking the place of the terminal, sends the session to the IMS, so that the IMS regards the session as a normal IMS session.

When the UE accesses the IMS through the CS domain, a similar session establishment process exists, where only the I1-PS message needs to be replaced by an I1-CS message.

It can be seen from the session establishment process of the user in the IMS Centralized Service (ICS) that, the session control signaling and the bearer control signaling are performed separately, and finally combined in the ICCF of the home location. When the user establishes the session through the I1-PS, because the called number carried in the Setup message is ICCF PSI (i.e., a routing address of the ICCF) in the bearer establishment process, a Visit Mobile Switch Center (VMSC) cannot sense that the called number is an emergency call by analyzing the called number or cannot sense that the called number is for providing a session for monitoring, which results in that the VMSC cannot provide an emergency service and a monitoring service. In the establishment process of the session control signaling, because the bearer is in the CS domain, a PS domain core network such as a Serving General packet radio service Support Node (SGSN) and a Gateway General packet radio service Support Node (GGSN) cannot obtain the media stream in a user plane and cannot provide an emergency service and a monitoring service. Similarly, when the session is established through the I1-CS, although the I1-CS signaling message passes through the VMSC, because the VMSC transparently transmits the message and does not resolve the content of the message, the VMSC cannot learn the called number, so that an emergency service and a monitoring service cannot be provided.

### SUMMARY OF THE INVENTION

In order to enable a terminal to provide an emergency call service and a monitoring service for a terminal user when a session is established by using I1, the present invention is directed to a method, system, and device for providing a service. The technical solutions are as follows.

The present invention provides a method for providing a service, which includes the following steps.

A terminal acquires a network instruction.

The terminal initiates a call in a Circuit Switched (CS) domain according to the network instruction.

The CS domain receives the call from the terminal and provides a service.

The present invention provides a system for providing a service, which includes a delivery device, User Equipment (UE), and a device for providing a service.

The delivery device is configured to deliver a network instruction to the UE.

The UE is configured to initiate a call to the device for providing a service in a CS domain after acquiring the network instruction delivered by the delivery device.

The device for providing a service is configured to provide a service after receiving the call from the UE.

The present invention provides a delivery device, which is configured to deliver a network instruction to a UE, so as to enable the UE to initiate, after receiving the network instruction and according to the network instruction, a call to a device for providing a service in a CS domain, and acquire a service provided by the device for providing a service after the device for providing a service receives the call.

The UE includes an acquisition module and a processing module.

The acquisition module is configured to acquire a network instruction.

The processing module is configured to initiate a call in a CS domain after the acquisition module acquires the network instruction.

The technical solutions have the following benefits:
When the terminal user establishes a session by using an Internet Protocol (IP) Multimedia Subsystem (IMS) CS Control Protocol (ICCP) signaling and an emergency call or a monitoring service needs to be provided, a network instruction of not establishing a session by using an ICCP signaling (or that the session is an emergency call, or that the terminal is rejected for access and activation) through a network entity with enhanced functions (such as an enhanced VMSC or an enhanced Proxy Call Session control Function (P-CSCF)) is delivered to the terminal. After the terminal acquires the network instruction, a session call is initiated in the CS domain, and the CS domain provides an emergency call or monitoring service for the user, so that the terminal is capable of providing an emergency call service and a monitoring service for the terminal user when a session is established by using an ICCP signaling.

### BRIEF DESCRIPTION OF THE DRAWINGS

FIG. 1 is a schematic view of an ICS architecture according to a first embodiment of the present invention;
FIG. 2 is a flow chart of a method for providing a service according to the first embodiment of the present invention;
FIG. 3 is a schematic view of information interaction of the method for providing a service according to the first embodiment of the present invention;
FIG. 4 is a flow chart of a method for providing a service according to a second embodiment of the present invention;
FIG. 5 is a schematic view of information interaction of the method for providing a service according to the second embodiment of the present invention;
FIG. 6 is a flow chart of a method for providing a service according to a third embodiment of the present invention;
FIG. 7 is a schematic view of information interaction of the method for providing a service according to the third embodiment of the present invention;
FIG. 8 is a flow chart of a method for providing a service according to a fourth embodiment of the present invention;
FIG. 9 is a schematic view of information interaction of the method for providing a service according to the fourth embodiment of the present invention;
FIG. 10 is a flow chart of a method for providing a service according to a sixth embodiment of the present invention;
FIG. 11 is a schematic view of information interaction of the method for providing a service according to the sixth embodiment of the present invention;
FIG. 12 is a flow chart of a method for providing a service according to a seventh embodiment of the present invention;
FIG. 13 is a schematic view of information interaction of the method for providing a service according to the seventh embodiment of the present invention;
FIG. 14 is a flow chart of a system for providing a service according to a ninth embodiment of the present invention; and
FIG. 15 is a schematic view of UE according to an eleventh embodiment of the present invention.

### DETAILED DESCRIPTION OF THE EMBODIMENTS

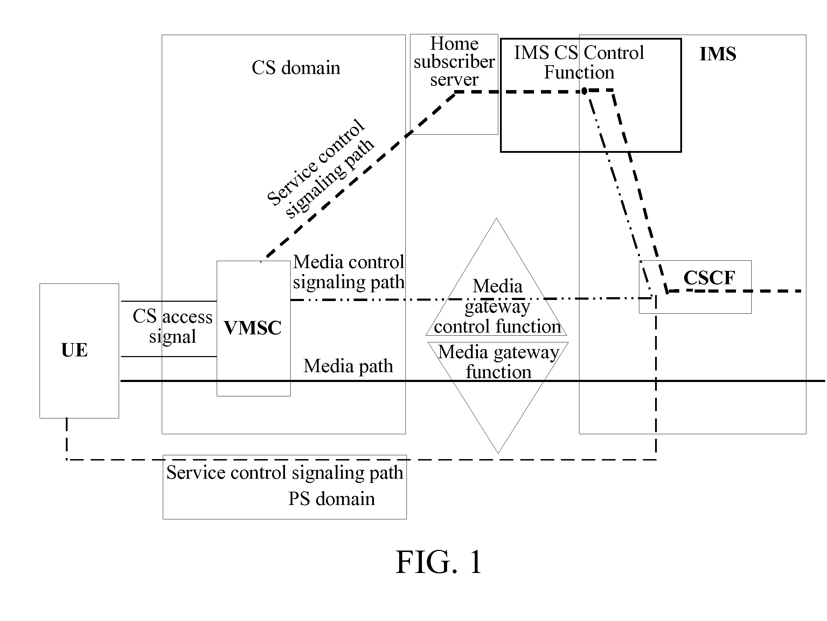

Hereinafter, the present invention is described in detail with reference to some exemplary embodiments and the accompanying drawings. FIG. 1 is a schematic view of an Internet Protocol (IP) Multimedia Subsystem (IMS) Centralized Service (ICS) architecture according to an embodiment of the present invention. In order to realize interaction between User Equipment (UE) and an IMS network service control entity in a service control process, an IMS Circuit Switched (CS) control function is newly added into an IMS network, so as to achieve a signaling adaption function that the UE accesses the IMS network through a CS domain and a function of combining a session control signaling and a medium control signaling. As described above, it can be known by persons of ordinary skill in the art that, when the user uses terminal UE accesses a network, a demand of initiating an emergency call or a demand of monitoring the user by the network may occur at any time. The method in this embodiment includes the following steps. A terminal acquires a network instruction. The terminal initiates a call in a CS domain according to the network instruction. The CS domain receives the call from the terminal and provides a service. The service is an emergency call service or a monitoring service. Thus, the object of providing an emergency call service and a monitoring service for the terminal user by the terminal when a session is established by using an IMS CS Control Protocol (ICCP) signaling is achieved.

Hereinafter, the method for providing a service according to this embodiment is illustrated in detail with reference to some exemplary embodiments. In the first, second, third, and fourth embodiments, the method is illustrated by taking a case of providing an emergency service as an example, and in the fifth, sixth, and seventh embodiments, the method is illustrated by taking a case of providing a monitoring service as an example.

### Embodiment 1

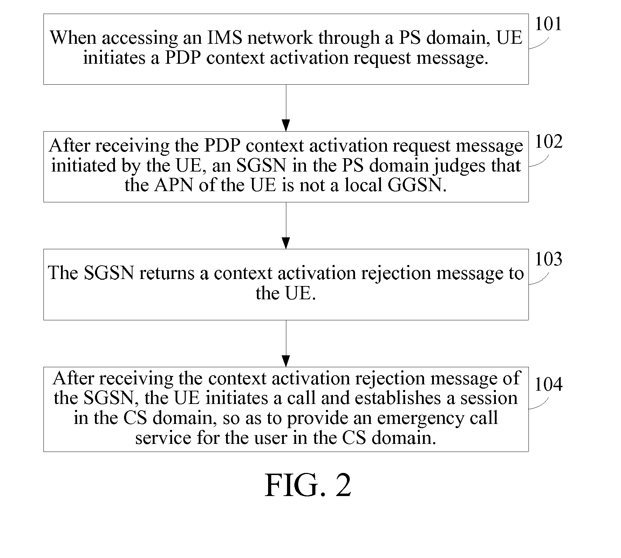

Referring to FIG. 2, in this embodiment, the present invention provides a method for providing a service. The method is illustrated by taking the schematic view of the ICS architecture in FIG. 1 and a situation of providing an emergency call service as an example. When a UE accesses an IMS through a Packet Switched (PS) domain, the method includes the following steps.

In step 101, when accessing an IMS network through a PS domain, the UE initiates a Packet Data Protocol (PDP) context activation request message. An Access Point Name (APN) carried in the PDP context activation request message is an address of a Gateway General packet radio service Support Node (GGSN) preset by the IMS.

When the UE accesses the IMS through the PS domain, before a session is established, the UE sends a PDP context activation request message, and the PDP context activation request message carries an APN address identifier allocated to the UE by the IMS network, that is, a GGSN address.

In step 102, after receiving the PDP context activation request message initiated by the UE, a Serving General packet radio service Support Node (SGSN) in the PS domain judges that the APN of the UE is not a local GGSN.

Because the GGSN address carried in the PDP context activation request message is allocated by the IMS network, it is not consistent with an identifier of a local GGSN address of the SGSN, and the SGSN judges that an access path of the UE at this time is to access the IMS network through the PS domain.

In step 103, the SGSN returns a context activation rejection message to the UE.

In step 104, after the UE receives the context activation rejection message of the SGSN, a call is initiated and a session is established in the CS domain, so that the UE can provide an emergency call service for the user in the CS domain.

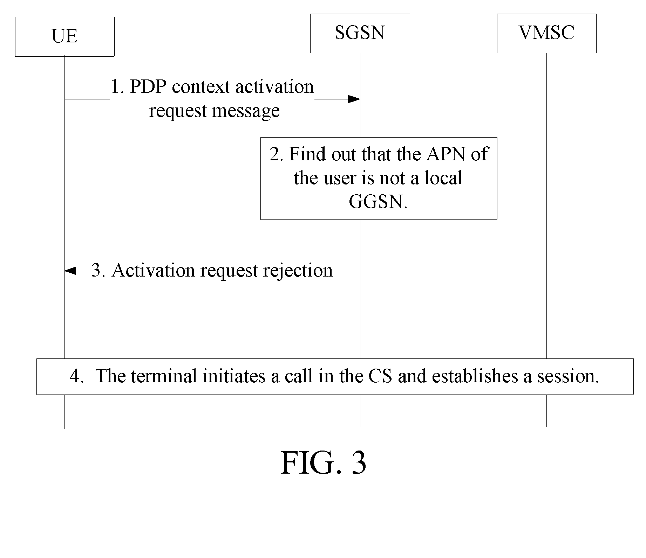

FIG. 3 is a schematic view of information interaction of the method for providing a service according to this embodiment. Referring to FIG. 3, when the UE accesses the IMS through the PS domain, before the session establishment is initiated, the SGSN of the PS domain judges that the APN of the UE is not a local GGSN and the activation request of the UE is rejected. Thus, the UE is capable of providing an emergency call service for the user when the session is established by using the I1-PS.

### Embodiment 2

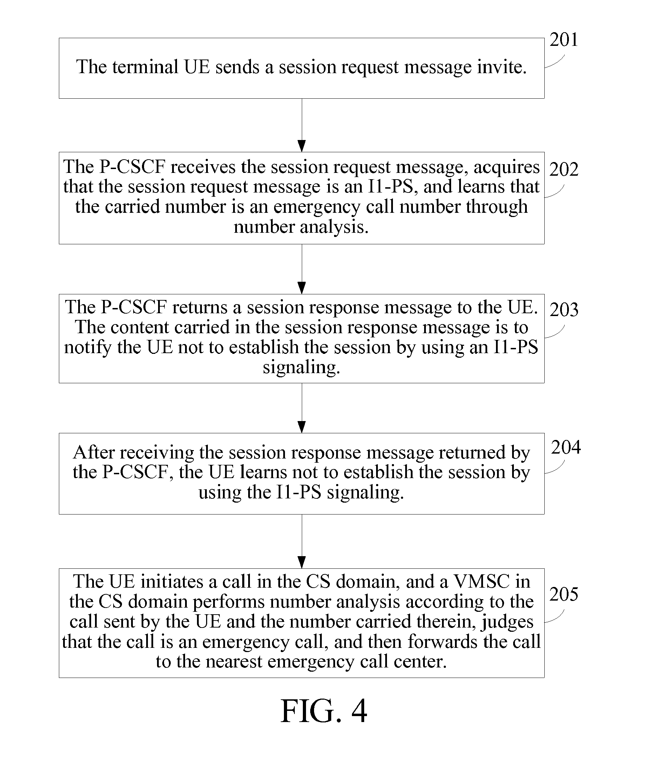

Referring to FIG. 4, in this embodiment, the present invention provides a method for providing a service. The method is illustrated by taking the schematic view of the ICS architecture in FIG. 1 and a situation of providing an emergency call service as an example. When the terminal accesses the IMS through the PS domain, the method includes the following steps.

In step 201, the terminal UE sends a Session Request Message Invite carrying an emergency call number and a call identifier I1-PS.

When the terminal UE accesses the IMS through the PS, because the 11 signaling between the UE and the IMS is I1-PS, which may be the Session Initiation Protocol (SIP), the UE sends a session request message through the SIP. For example, the emergency call from the user is "110", and after acquiring "110" input by the user, the terminal UE sends a Session Request Message Invite carrying "110" and the I1-PS identifier to the Proxy Call Session Control Function (P-CSCF) of the current location.

In step 202, the P-CSCF receives the session request message, acquires the call identifier I1-PS carried in the session request message, and learns that the carried number is an emergency call number through number analysis.

After receiving the session request sent by the UE, the P-CSCF judges, according to the acquired call identifier I1-PS, that the session message is I1-PS, and judges, through number analysis, that the acquired number is an emergency number. The process of acquiring the call identifier I1-PS for judgment and the process of acquiring the number for judgment are not subjected to a specific sequence. That is, it may be first judged that the number is I1-PS and then judged that the number is an emergency call, and it may also be first judged that the number is an emergency call and then judged that the number is I1-PS. In this embodiment, a specific judgment sequence is not limited. The number analysis performed by the P-CSCF may include matching the acquired number with a pre-saved emergency number. If the two numbers are matched, it is indicated that the acquired number is an emergency number. Similarly, in this embodiment, the specific implementation method of performing number analysis by the P-CSCF is not limited.

In step 203, the P-CSCF returns a session response message to the UE. The content carried in the session response message is that the UE is instructed not to use the I1-PS signaling to establish the session.

In step 204, after receiving the session response message returned by the P-CSCF, the UE learns not to establish the session by using the I1-PS signaling.

In step 203, when the P-CSCF returns the session response message to the UE, information for notifying the terminal UE that the session is an emergency call may also be carried in the session request message. Accordingly, in step 204, when receiving the session response message returned by the P-CSCF, the UE judges that the session is an emergency call, and determines not to establish the session by using the I1-PS signaling.

In step 205, the UE initiates a call in the CS domain, and a Visit Mobile Switch Center (VMSC) in the CS domain performs number analysis according to the call sent by the UE and the number carried therein, judges that the call is an emergency call, and then forwards the call to the nearest emergency call center.

In step 205, when the UE initiates a call in the CS domain, an emergency call identifier may be carried in the call. Accordingly, the VMSC in the CS domain does not need to perform number analysis after receiving the call from the UE, and only needs to directly forward the call to the emergency call center according to the emergency call identifier carried in the call. In specific implementation, in order to improve the efficiency of the emergency call, the VMSC in the CS domain forwards the call to the nearest emergency call center. In this manner, the object of providing an emergency call service for a user by the terminal when a session is established by using I1-PS is achieved.

In this embodiment, the mode of carrying the I1-PS identifier in the session request message sent by the UE in step 201 is not limited. The specific arrangement can depend on deployment demands of the system. For example, it is indicated that the session is I1-PS by some special identifier in the session request message instead of an I1-PS identifier carried in the session request message. For example, a certain field in the Session Request Message Invite is null, for example, the Session Description Protocol (SDP) is null, so that the P-CSCF judges that the SDP is null, and further judges that the session is I1-PS. Furthermore, in this embodiment, the identifier of the I1-PS indicates that the session is I1-PS, and on the other hand, the identifier may also indicate that the session is borne by the CS (because the I1-PS is usually used, and the I1-PS is borne by the CS), so that the P-CSCF does not reserve bearing resource for the session. Therefore, the identifier is an identifier borne by the CS.

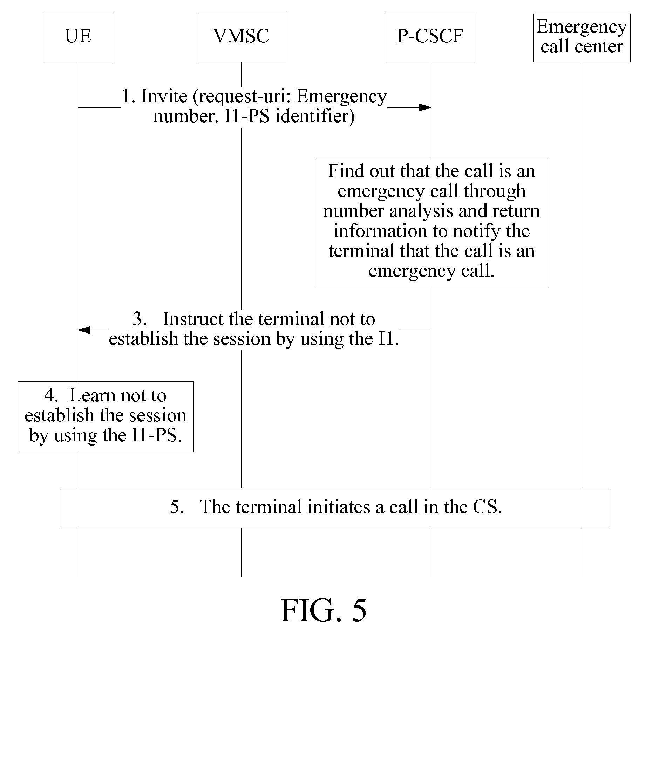

FIG. 5 is a schematic view of information interaction of the method for providing a service according to this embodiment. Referring to FIG. 5, when the UE accesses the IMS through the PS domain, after the P-CSCF judges that the session request carries the I1-PS identifier and the emergency call number, the UE is instructed not to use I1 for the session, so that the UE is capable of providing an emergency call service for the user when the session is established by using the I1-PS.

### Embodiment 3

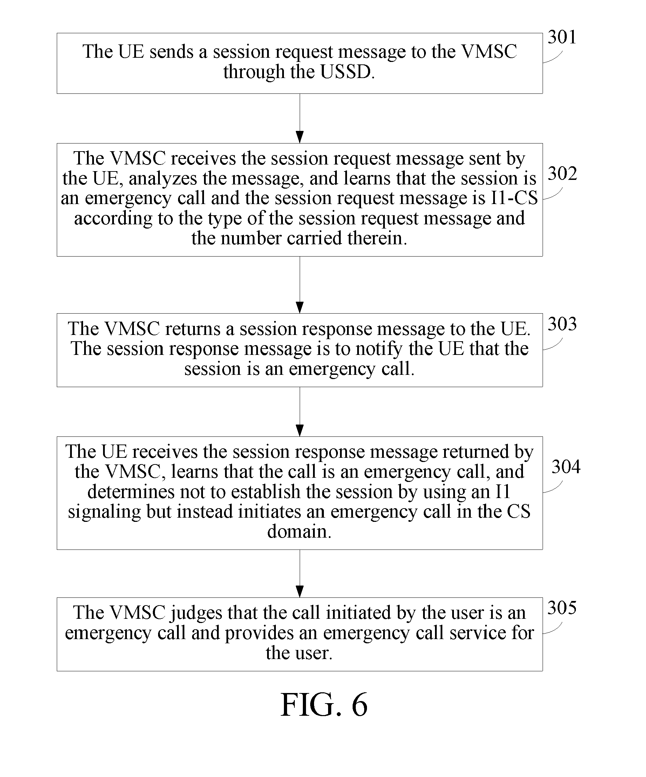

Referring to FIG. 6, in this embodiment, the present invention provides a method for providing a service. The method is illustrated by taking the schematic view of the ICS architecture in FIG. 1 and a situation of providing an emergency call service for the user as an example. When the terminal accesses the IMS through the CS domain, in a case that the I1-CS signaling is an Unstructured Supplementary Service Data (USSD), the method includes the following steps.

In step 301, the UE sends a session request message to the VMSC through the USSD. The session request message carries an emergency number.

In step 302, the VMSC receives the session request message sent by the UE and learns, according to the type of the session request message and the number carried in the session request message after analyzing the message, that the session is an emergency call and the session request message is I1-CS.

The VMSC receives the session request message sent by the UE and learns that the call is an emergency call after number analysis on the emergency number carried in the message.

In step 303, the VMSC returns a session response message to the UE. The session response message is used to notify the UE that the session is an emergency call.

In step 304, the UE receives the session response message returned by the VMSC, learns that the call is an emergency call, determines not to establish the session by using I1 signaling, but initiates an emergency call in the CS domain.

In step 303, when the VMSC returns the session response message to the UE, information for instructing the UE not to establish the session by using the I1 signaling may also be carried in the session response message. Accordingly, in step 304, after receiving the session response message returned by the VMSC, the UE directly initiates an emergency call in the CS domain.

In step 305, the VMSC judges that the call initiated by the user is an emergency call and provides an emergency call service for the user.

When the UE initiates the call in the CS domain, an emergency call identifier may be carried in the call. Accordingly, after receiving the call from the UE, the VMSC in the CS domain does not need to perform number analysis but only needs to directly forward the call to the emergency call center according to the emergency call identifier carried in the call. Therefore, the object of providing an emergency call service for the user by the terminal when a session is established by using I1-PS is achieved.

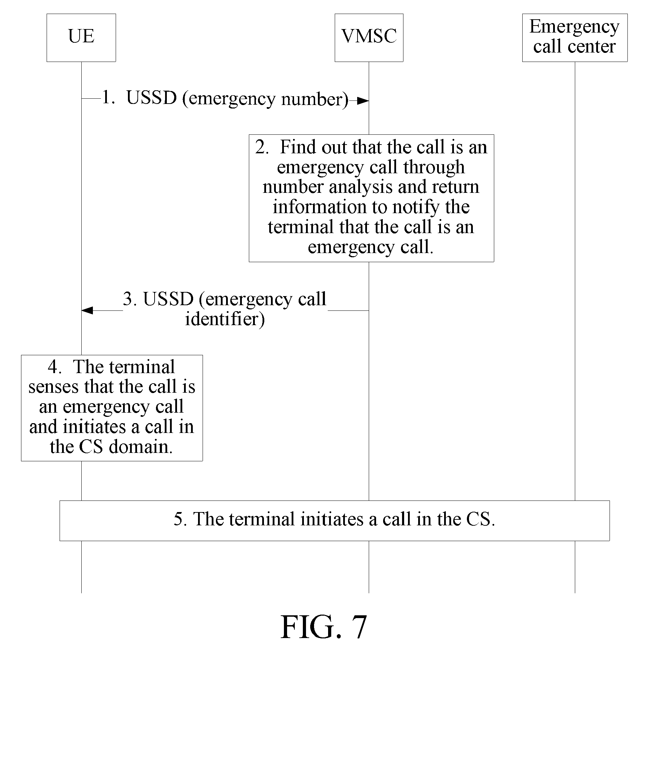

FIG. 7 is a schematic view of information interaction of the method for providing a service according to this embodiment.

Referring to FIG. 7, when the UE accesses the IMS through the CS domain, after it is judged through the VMSC that the session request carries the emergency number, the UE is notified that the call is an emergency call. In this manner, the object of providing an emergency call service for the user by the UE when a session is established by using I1-PS is achieved.

It is known by persons of ordinary skill in the art that when the I1-CS signaling is realized through a Dual Tone Multiple Frequency (DTMF) and a Short Message Service (SMS), the method is similar, and is not described repeatedly here.

### Embodiment 4

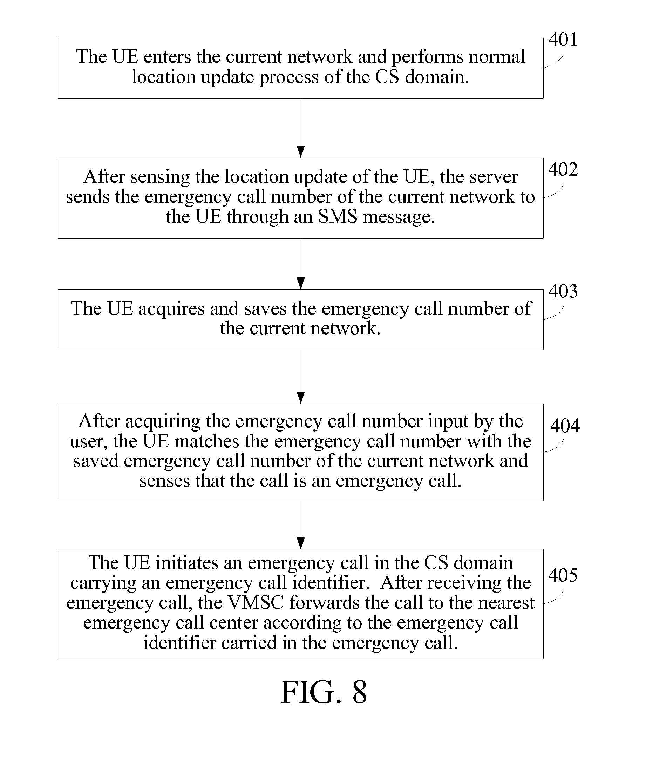

Referring to FIG. 8, in this embodiment, the present invention provides a method for providing a service. When the terminal UE accesses the IMS through the CS domain, the UE acquires the emergency call number of the current network where it is located delivered by the Over-The-Air (OTA) server, so that the object of providing the emergency call service for the user is achieved. The method includes the following steps.

In step 401, the UE enters the current network, and a normal location update process of the CS domain is performed.

In step 402, after sensing the location update of the UE, the OTA server sends the emergency call number of the current network to the UE through an SMS message.

The OTA server delivers, through the SMS message, the pre-saved emergency call number of the current network such as 119, 110, and 120 to the UE that enters the current network.

In step 403, the UE acquires and saves the emergency call number of the current network.

In step 404, after acquiring an emergency call number input by the user, the UE matches the emergency call number with the saved emergency call number of the current network to sense that the call is an emergency call.

In step 405, the UE initiates an emergency call in the CS domain. The emergency call carries an emergency call identifier. After receiving the emergency call, the VMSC forwards the call to the nearest emergency call center according to the emergency call identifier carried in the emergency call.

In this step, when the UE initiates the emergency call in the CS domain, the emergency call identifier may not be carried. Instead, after the VMSC receives the emergency call, the VMSC learns that the call is an emergency call through number analysis to judge that the call initiated by the user is an emergency call, and forwards the call to the nearest emergency call center, so as to provide an emergency call service for the user.

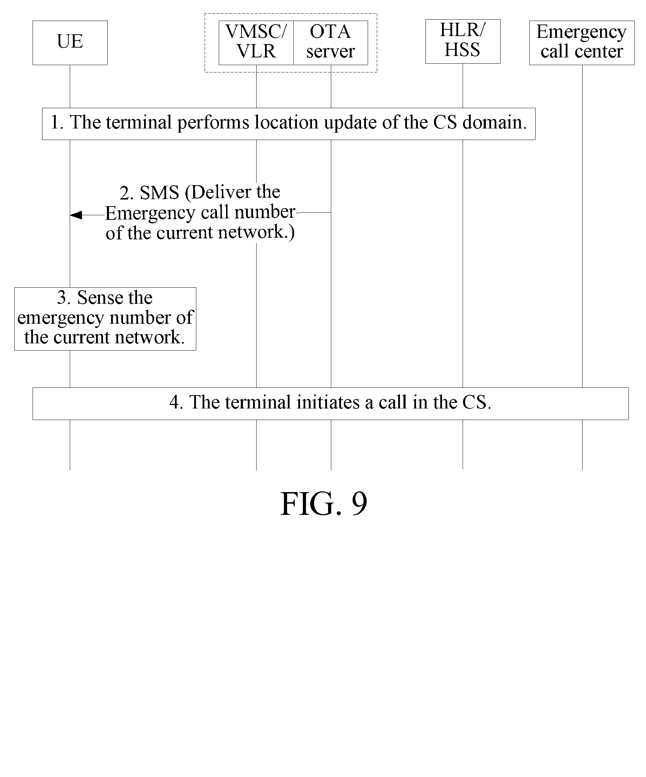

FIG. 9 is a schematic view of information interaction of the method for providing a service according to this embodiment. Referring to FIG. 9, when the UE accesses the IMS through the CS domain, after the OTA server delivers the emergency call number of the current network to the UE, the UE initiates an emergency call in the CS domain. Therefore, the object of providing an emergency call service for the user by the UE when a session is established by using I1 is achieved.

In the above description, only the combination of the OTA server and the VMSC is illustrated as an example. As a function, the OTA server may be a separate device or may be in combination with a Home Location Register (HLR)/Home Subscriber Server (HSS).

In view of the above, in the previous embodiments, how the terminal UE provides an emergency call service for the user when the session is established by using an ICCP signaling is illustrated in detail. Hereinafter, in the following embodiments, how the terminal UE provides a monitoring service for the user when the session is established by using an ICCP signaling is illustrated in detail.

### Embodiment 5

In this embodiment, the present invention provides a method for providing a service, and the method is illustrated by taking a case of providing a monitoring call service as an example. When the UE accesses the IMS through the PS domain, the method is similar to that in the first embodiment. Before the UE initiates I1 to establish a session, the SGSN finds that the user needs to be monitored and the APN is not a local GGSN, so that the SGSN returns activation request rejection to the UE. After the UE receives the activation request rejection from the SGSN, the UE initiates a call in the CS domain and establishes a session, which realizes the monitoring on the user in the CS domain.

### Embodiment 6

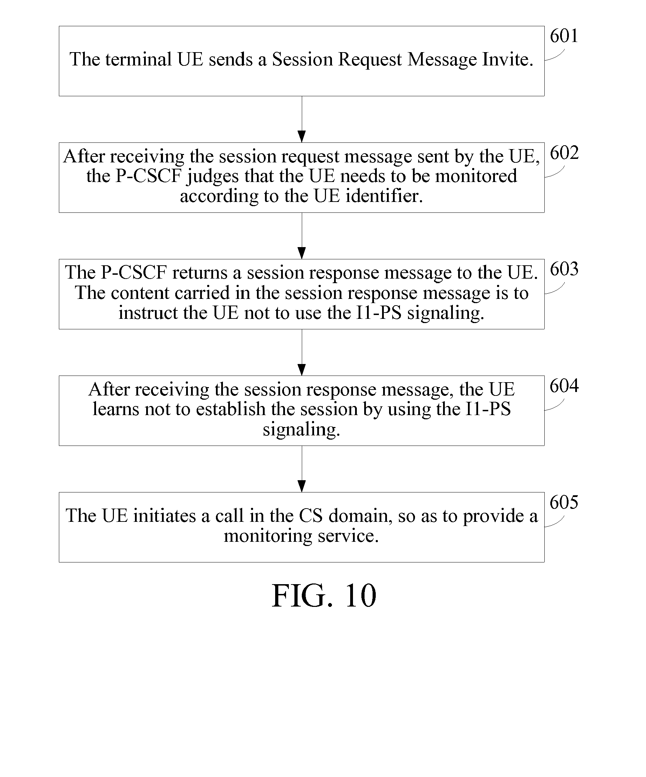

Referring to FIG. 10, in this embodiment, the present invention provides a method for providing a service. The method is illustrated by taking the schematic view of the ICS architecture in FIG. 1 and a case of providing a monitoring call service as an example. When the UE accesses the IMS through the PS domain, the method includes the following steps.

In step 601, the terminal UE sends a Session Request Message Invite. The Session Request Message Invite carries the calling number and a call identifier that the call is I1-PS.

In step 602, after receiving the session request message sent by the UE, the P-CSCF judges, according to the calling number, that the session needs to be monitored, and judges, according to the call identifier I1-PS, that the session is to be established by using the I1 signaling.

In this embodiment, a sequence of judging, according to the calling number, that the UE needs to be monitored, and judging, according to the call identifier I1-PS, that the session is to be established by using the I1 signaling, is not limited.

Furthermore, in this embodiment, the specific judgment method adopted when the monitoring service is judged is not limited and only the judgment according to the calling number of the user is illustrated as an example. In this embodiment, the judgment may also be performed according to one or more of: a calling number, a called number, a terminal identifier, and current location information of the terminal of the user.

In step 603, the P-CSCF returns a session response message to the UE, and the content carried in the session response message is to instruct the UE not to use the I1-PS signaling.

In step 604, after receiving the session response message, the UE learns not to establish the session by using the I1-PS signaling.

In step 605, the UE initiates a call in the CS domain, so as to provide a monitoring service in the CS domain.

When the UE initiates the call in the CS domain, the VMSC in the CS domain acquires, according to the call sent by the UE, the calling and called information of the session and the media information of the session. In this way, the monitoring on the UE is realized.

In this embodiment, the illustration is given by taking an example that the UE initiating the call is the monitored object. It can be known by persons of ordinary skill in the art that when the monitoring service is implemented, the called number may also be the monitored object. Accordingly, in step 602, after receiving the session request message sent by the UE, the P-CSCF judges, according to the called number carried in the session request message, that monitoring needs to be performed. Moreover, the location information of the UE may also be the monitored object. Accordingly, in step 602, the P-CSCF judges, according to the current location information (of the UE) carried in the Session Request Message Invite sent by the terminal UE, that the user needs to be monitored.

In this embodiment, when the terminal is not a terminal of the P-CSCF local network, that is, the SGSN judges that the APN carried in the PDP context activation request initiated by the terminal is not a local APN, the SGSN converts the APN of the terminal into a local APN.

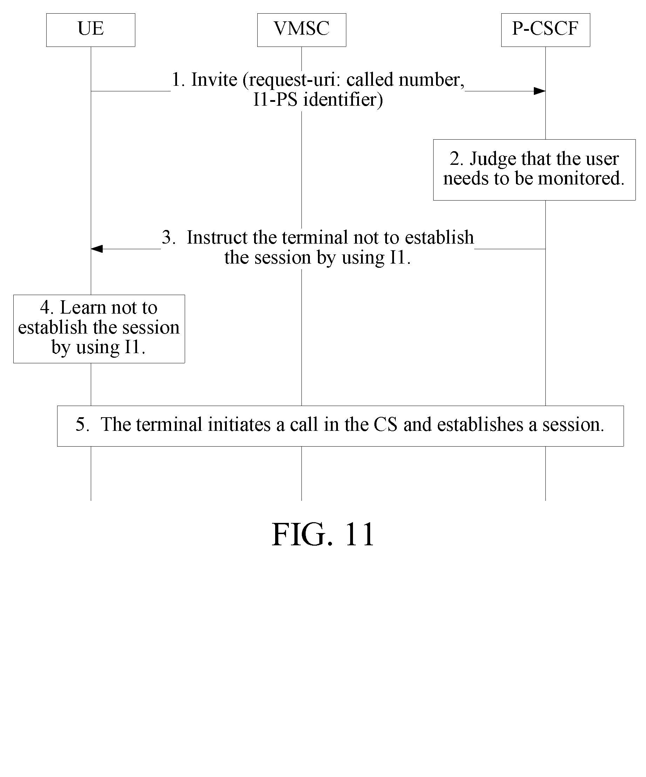

FIG. 11 is a schematic view of information interaction of the method for providing a service according to this embodiment. Referring to FIG. 11, when the UE accesses the IMS through the PS and CS domains, the P-CSCF judges that the service needs to be monitored and instructs the UE not to establish the session by using I1 signaling, and the UE initiates a call in the CS domain, so that the US is capable of providing a monitoring service when the session is established by using the I1-PS.

### Embodiment 7

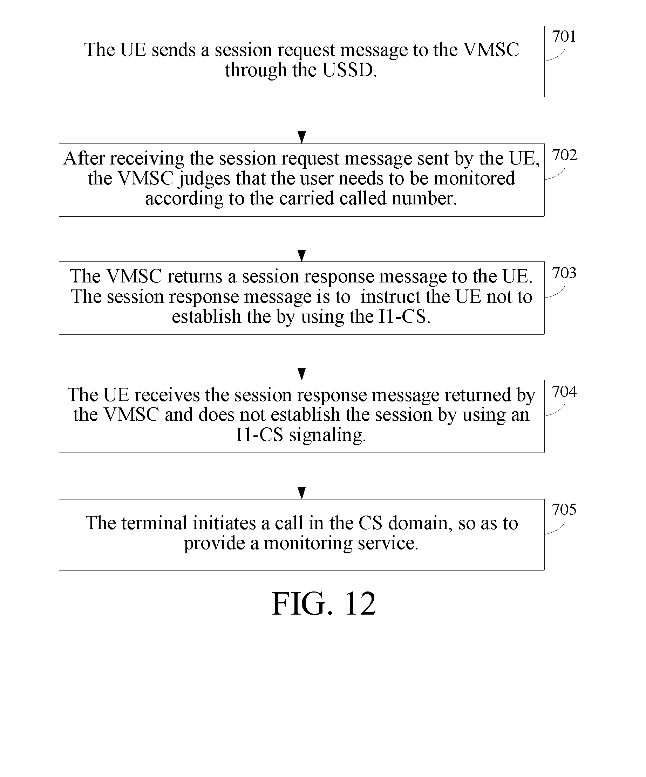

Referring to FIG. 12, in this embodiment, the present invention provides a method for providing a service. The method is illustrated by taking the schematic view of the ICS architecture in FIG. 1 and a case of providing a monitoring call service as an example. When the UE accesses the IMS through the CS domain, the method includes the following steps.

In step 701, the UE sends a session request message to the VMSC through the USSD. The session request message carries a called number.

In step 702, after receiving the session request message sent by the UE, the VMSC judges that the session request message is I1-CS and judges that the user needs to be monitored.

In this embodiment, the specific judgment method adopted when the monitoring service is judged is not limited, and only the judgment according to the called number of the user is taken as an example for illustration. In this embodiment, the judgment of whether the user needs to be monitored may also be performed according to one or more of: the calling number, the called number, a terminal identifier, and current location information of the terminal of the user.

In step 703, the VMSC returns a session response message to the UE. The session response message is used to notify the UE that, the session shall not be established by using the I1-CS.

In step 704, the UE receives the session response message returned by the VMSC and does not establish the session by using I1-CS signaling.

In step 705, the UE initiates a call in the CS domain, so as to provide a monitoring service in the CS.

When the user initiates a call in the CS domain, a visit network acquires, through the VMSC, the calling and the called information of the session and media information of the session, so as to realize the monitoring service.

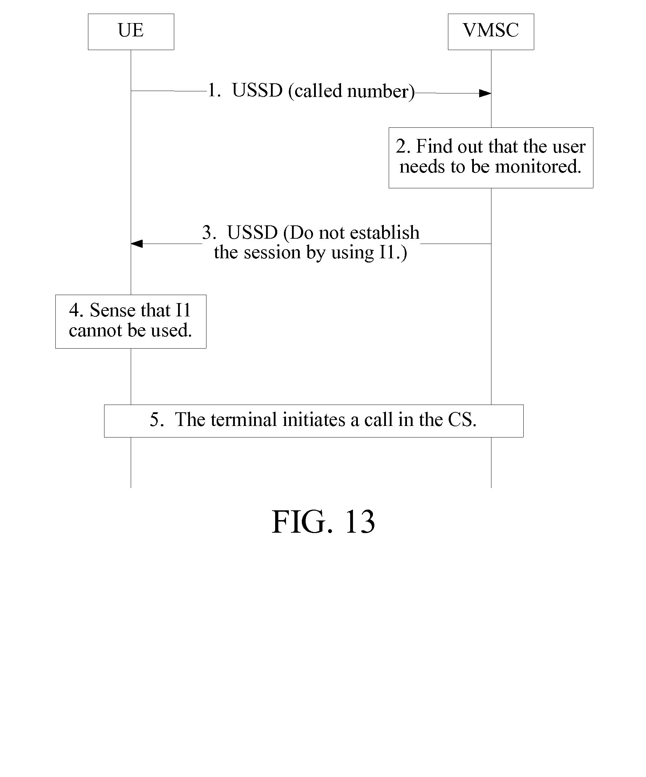

FIG. 13 is a schematic view of information interaction of the method for providing a service according to this embodiment. Referring to FIG. 13, when the UE accesses the IMS through the CS domain, the VMSC judges that service monitoring needs to be performed on the user and instructs the UE not to establish the session by using the I1 signaling, so that the UE initiates a call in the CS domain, so that the UE is capable of providing a monitoring service when the session is established by using the I1-CS.

### Embodiment 8

In this embodiment, the present invention provides a method for providing a service. Taking a case of providing a monitoring call service as an example, and compared with the method in the fourth embodiment, before the UE initiates a session to be established with I1, when the UE enters the current network and normal location update of the CS domain is performed, the OTA server senses that the user needs to be monitored, and delivers an indication to the terminal to instruct the terminal not to establish the session by using the ICCP and instead to initiate a session in the CS domain

In specific implementation, the user data is carried in the location update message initiated by the UE. After receiving the location update message sent by the UE, the OTA server judges, according to the user controlled data preset by the OTA server itself, whether the user needs to be monitored. If it is judged that the user needs to be monitored, the OTA server delivers an instruction to the UE, instruct the UE not to establish a session by using an ICCP.

The user data may be one or more of: a calling number, a called number, a terminal identifier, current location information of the terminal of the user. Accordingly, the user controlled data preset by the OTA server itself is configured according to the system demand, for example, one or more of: a calling number, a called number, a terminal identifier, current location information of the terminal. In this embodiment, the judgment method adopted when the monitoring service is judged is not limited.

In this embodiment, the OTA server delivers an instruction of not establishing a session by using an ICCP, and the object of providing a monitoring service by the UE when the session is established by using I1-CS is achieved.

### Embodiment 9

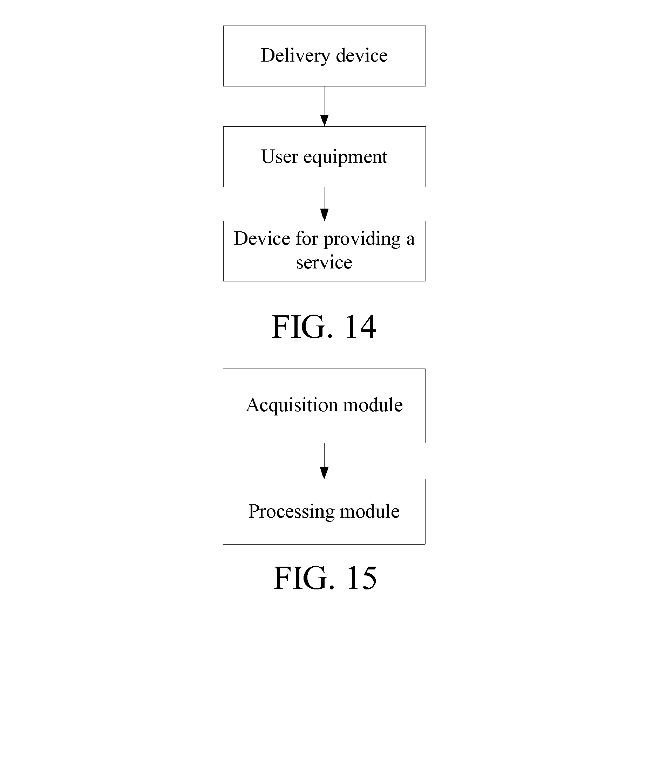

Referring to FIG. 14, in this embodiment, the present invention provides a system for providing a service. The system includes a delivery device, a UE, and a device for providing a service.

The delivery device is configured to deliver a network instruction to the UE.

The UE is configured to acquire the network instruction delivered by the delivery device and initiate a call to the device for providing a service in the CS domain.

The device for providing a service is configured to provide a service after receiving the call from the UE.

When the network instruction is delivered before the UE establishes the session request, the delivery device in the system in this embodiment may be an SGSN or an OTA server.
1) The SGSN is configured to receive a context activation request message sent by the UE, judge that an APN carried in the context activation request message is a non-local APN, and send a context activation rejection message to the UE.
2) The OTA server is configured to deliver an emergency number of a current network where the UE is located to the UE after sensing that UE has performed location update.

Accordingly, the UE is configured to save the emergency number of the current network delivered by the OTA server, acquire the number input by the user, judge, according to the emergency number saved by the saving module, that an emergency call service needs to be provided, and initiate an emergency call to the device for providing a service in the CS domain.
3) The OTA server is configured to sense that the terminal has performed location update, judge that the terminal needs to be monitored, and deliver to the terminal an instruction, instructing the terminal not to establish a session by using an ICCP.

Accordingly, the UE is configured to receive the instruction delivered by the OTA server, and initiate a call in the CS domain after the receiving module receives the instruction.

When the network instruction is delivered after the UE sends the session request, the delivery device in the system for providing a service according to this embodiment may be a P-CSCF or a VMSC.

### 1) P-CSCF

The P-CSCF is configured to send an instruction of not establishing a session by using an ICCP signaling to the UE, after judging, according to a number and an identifier carried in the session request message initiated by the UE, that an emergency call service needs to be provided and the session request message is I1-PS.

Accordingly, the UE is configured to send the session request message carrying the number and the identifier to the P-CSCF, receive the instruction sent by the P-CSCF, and initiate an emergency call in the device for providing a service in the CS domain.

Alternatively, the P-CSCF is configured to send a notification that the session is an emergency call to the UE after judging, according to the number and the identifier carried in the session request message initiated by the UE, that an emergency call service needs to be provided and that the session request message is I1-PS.

Accordingly, the UE is configured to send the session request message carrying the number and the identifier to the P-CSCF, receive the notification sent by the P-CSCF, determine not to establish a session by using an ICCP signaling, and initiate an emergency call to the device for providing a service in the CS domain.

Alternatively, the P-CSCF is configured to receive the session request message carrying the user data and the identifier sent by the UE, initiate an instruction of not establishing a session by using an ICCP signaling to the UE after judging, according to the preset user controlled data and the user data carried in the session request message, that monitoring service needs to be provided, and judging, according to the identifier, that the session request message is I1-PS.

### 2)VMSC

The VMSC is configured to receive the session request message initiated by the UE, and send an instruction of not establishing a session by using an ICCP signaling to the terminal after judging, according to the type of the session request message and the number carried in the session request message, that an emergency call service needs to be provided and that the session request message is I1-CS.

Accordingly, the UE is configured to send the session request message carrying the number to the VMSC, and initiate an emergency call to the device for providing a service in the CS domain after receiving the instruction sent by the VMSC.

Alternatively, the VMSC is configured to receive the session request message sent by the UE, and send a notification that the session is an emergency call to the UE after judging, according to the type of the session request message and the number carried in the session request message, that an emergency call service needs to be provided and that the session request message is I1-CS.

Accordingly, the UE is configured to send the session request message to the VMSC, receive the instruction sent by the VMSC, determine not to establish a session by using an ICCP signaling, and initiate an emergency call to the device for providing a service in the CS domain.

Alternatively, the VMSC is configured to receive the session request message, carrying the user data and sent by the UE, and deliver an instruction of not establishing a session by using an ICCP signaling to the UE after judging, according to the preset user controlled data and the user data carried in the session request message, that a monitoring service needs to be provided, and judging, according to the type of the session request message, that the session request message is I1-CS.

With the system in this embodiment, in the way of providing a network entity with enhanced functions (such as an enhanced VMSC and an enhanced P-CSCF), the object of providing an emergency call service or a monitoring service for the terminal user by the terminal when the session is established by using an ICCP signaling is achieved.

### Embodiment 10

In this embodiment, the present invention provides a delivery device. The delivery device is configured to deliver a network instruction to a UE, so as to enable the UE to initiate, according to the network instruction after receiving the network instruction, a call to a device for providing a service in the CS domain, thereby acquiring the service provided by the device for providing a service after the call is received.

When the network instruction is delivered before the UE establishes the session request, the delivery device according to this embodiment may be an SGSN or an OTA server.

### 1) The SGSN includes a first receiving module and a first processing module.

The first receiving module is configured to receive a context activation request message sent by the UE.

The first processing module is configured to send a context activation rejection message to the UE after judging that an APN carried in the context activation request message is a non-localAPN.

### 2) The OTA server includes a second receiving module and a second processing module.

The second receiving module is configured to sense that the UE has performed location update.

The second processing module is configured to deliver an emergency number of the current network where the UE is located to the UE, after the second receiving module senses that the UE has performed location update.

Alternatively, the OTA server includes a third receiving module and a third processing module.

The third receiving module is configured to sense that the terminal has performed location update.

The third processing module is configured to deliver an instruction of not establishing a session by using an ICCP signaling to the terminal, after the third receiving module senses that the terminal has performed location update and judges that the terminal needs to be monitored.

When the network instruction is delivered after the UE sends the session request, the delivery device according to this embodiment may be a P-CSCF or a VMSC.

### 1) The P-CSCF includes a fourth receiving module and a fourth processing module.

The fourth receiving module is configured to receive the session request message sent by the UE.

The fourth processing module is configured to send an instruction of not establishing a session by using an ICCP signaling to the UE after judging, according to the number and identifier carried in the session request message, that an emergency call service needs to be provided and that the session request message is I1-PS.

Alternatively, the P-CSCF includes a fifth receiving module and a fifth processing module.

The fifth receiving module is configured to receive the session request message sent by the UE.

The fifth processing module is configured to send a notification that the session is an emergency call to the UE after judging, according to the number and the identifier carried in the session request message, that an emergency call service needs to be provided and that the session request message is I1-PS.

Alternatively, the P-CSCF includes a sixth receiving module and a sixth processing module.

The sixth receiving module is configured to receive the session request message sent by the UE.

The sixth processing module is configured to send an instruction of not establishing a session by using an ICCP signaling to the UE after judging, according to the preset user controlled data and the user data and the identifier carried in the session request message, that a monitoring service needs to be provided and that the session request message is I1-PS.

### 2) The VMSC includes a seventh receiving module and a seventh processing module.

The seventh receiving module is configured to receive the session request message sent by the UE.

The seventh processing module is configured to send an instruction of not establishing a session by using an ICCP signaling to the UE after judging, according to the type of the session request message and the number carried in the session request message, that an emergency call service needs to be provided and that the session request message is I1-CS.

Alternatively, the VMSC includes an eighth receiving module and an eighth processing module.

The eighth receiving module is configured to receive the session request message sent by the UE.

The eighth processing module is configured to send a notification that the session is an emergency call to the UE after judging, according to the type of the session request message and the number carried in the session request message, that an emergency call service needs to be provided and that the session request message is I1-CS.

Alternatively, the VMSC includes a ninth receiving module and a ninth processing module.

The ninth receiving module is configured to receive the session request message sent by the UE.

The ninth processing module is configured to send an instruction of not establishing a session by using an ICCP signaling to the UE after judging, according to the preset user controlled data and the user data carried in the session request message, that a monitoring service needs to be provided, and judging, according to the type of the session request message, that the session request message is I1-CS.

With the delivery device of this embodiment, in the way of providing a network entity with enhanced functions (such as an enhanced VMSC and an enhanced P-CSCF), the object of providing an emergency call service or a monitoring service for the terminal user by the terminal when the session is established by using an ICCP signaling is achieved.

### Embodiment 11

Referring to FIG. 15, in this embodiment, the present invention provides a UE, which includes an acquisition module and a processing module.

The acquisition module is configured to acquire a network instruction.

The processing module is configured to initiate a call in the CS domain after the acquisition module acquires the network instruction.

The acquisition module of the UE in this embodiment is configured to acquire and save the emergency number of the current network where the UE is located delivered by the OTA server after sensing that the UE has performed location update.

Accordingly, the processing module is configured to: acquire the number input by the user and initiate an emergency call in the CS domain after the input number matches the emergency number saved by the acquisition module.

Alternatively, the acquisition module of the UE in this embodiment is configured to receive and save the instruction of not establishing a session by using an ICCP signaling, where the instruction is delivered by the OTA server.

Accordingly, the processing module is configured to initiate a call in the CS domain according to the instruction received by the acquisition module.

Alternatively, the acquisition module of the UE in this embodiment is configured to send to the SGSN a context activation request message carrying an APN and acquire the context activation rejection message sent by the SGSN.

Accordingly, the processing module is configured to initiate a call in the CS domain after the acquisition module acquires the context activation rejection message.

Alternatively, the acquisition module of the UE in this embodiment is configured to send to the P-CSCF a session request message carrying a number and an identifier and acquire the instruction of not establishing a session by using an ICCP signaling sent by the P-CSCF.

Accordingly, the processing module is configured to initiate an emergency call in the CS domain after the acquisition module acquires the instruction.

Alternatively, the acquisition module of the UE in this embodiment is configured to send to the P-CSCF a session request message carrying a number and an identifier and acquire the notification that the session is an emergency call sent by the P-CSCF.

Accordingly, the processing module is configured to determine not to establish a session by using an ICCP signaling after the acquisition module acquires the instruction and initiate an emergency call in the CS domain.

Alternatively, the acquisition module of the UE in this embodiment is configured to send to the VMSC a session request message carrying a number and acquire the instruction of not establishing a session by using an ICCP signaling, where the instruction is sent by the VMSC.

Accordingly, the processing module is configured to initiate an emergency call in the CS domain after the acquisition module acquires the instruction.

Alternatively, the acquisition module of the UE in this embodiment is configured to send to the VMSC a session request message carrying a number and acquire the notification that the session is an emergency call, where the notification is sent by the VMSC.

Accordingly, the processing module is configured to determine not to establish a session by using an ICCP signaling after the acquisition module acquires the instruction and initiate an emergency call in the CS domain.

Alternatively, the acquisition module of the UE in this embodiment is configured to send to the P-CSC a session request message carrying user data and an identifier and acquire the instruction of not establishing a session by using an ICCP signaling, where the instruction is sent by the P-CSCF. The user data includes one or more of: a called number, a calling number, a terminal identifier, and location information.

Accordingly, the processing module is configured to initiate a call in the CS domain after the acquisition module acquires the instruction.

Alternatively, the acquisition module of the UE in this embodiment is configured to send to the VMSC a session request message, where the session request message carries user data and identifier, and acquire the instruction of not establishing a session by using an ICCP signaling. The user data includes one or more of: a called number, a calling number, a terminal identifier, and location information.

Accordingly, the processing module is configured to initiate a call in the CS domain after the acquisition module acquires the instruction.

The UE in this embodiment does not establish a session by using an ICCP signaling after receiving the network instruction, but instead, initiates a call in the CS domain, so that the terminal is capable of providing an emergency call service and a monitoring service for the terminal user when the session is established by using an ICCP signaling.

Part of the steps according to the embodiments of the present invention may be implemented by software. The corresponding software program may be stored in a readable storage medium such as a Compact Disk Read-Only Memory (CD-ROM) or hardware drive.

The above descriptions are merely some exemplary embodiments of the present invention, but not intended to limit the present invention. Person having ordinary skill in the art may make various improvements and refinements without departing from the spirit and principles of the invention. All such modifications and refinements are intended to be covered by the present invention.

## Claims

1. A method for providing a service, comprising:
acquiring, by a terminal, a network instruction;
initiating, by the terminal, a call in a Circuit Switched (CS) domain according to the network instruction; and
receiving, by the CS domain, the call from the terminal, and providing a service.

2. The method for providing a service according to claim 1, wherein the network instruction is
a context activation rejection message sent to the terminal after a Serving General packet radio service Support Node (SGSN) judges that an Access Point Name (APN) carried in a context activation request message sent by the terminal is a non-localAPN.

3. The method for providing a service according to claim 1, wherein when the service is an emergency call service, the method comprises:
after an Over-The-Air (OTA) server senses that the terminal has performed location update, delivering an emergency number of a network where the terminal is currently located to the terminal;
saving, by the terminal, the emergency number of the current network;
initiating, by the terminal, an emergency call in the CS domain after the terminal acquires the input number and judges that the input number is an emergency number; and
providing, by the CS, an emergency call service for the terminal after receiving the call from the terminal.

4. The method for providing a service according to claim 1, wherein the service is an emergency call service, and the network instruction is
an instruction of not establishing a session by using an Internet Protocol (IP) Multimedia Subsystem (IMS) CS Control Protocol (ICCP) signaling sent to the terminal after a Proxy Call Session Control Function (P-CSCF) judges, according to a number and an identifier carried in a session request message initiated by the terminal, that an emergency call service needs to be provided and that a session request message is I1-Packet Switched (PS).

5. The method for providing a service according to claim 1, wherein
the service is an emergency call service, and the network instruction is a notification that the session is an emergency call sent to the terminal after a proxy call session Control Function (P-CSCF) judges, according to a number and an identifier carried in the session request message initiated by the terminal, that an emergency call service needs to be provided and that a session request message is I1-Packet Switched (PS); and
the acquiring, by the terminal, the network instruction further comprises: determining, by the terminal, according to the instruction, not to establish the session by using an Internet Protocol (IP) Multimedia Subsystem (IMS) CS Control Protocol (ICCP) signaling.

6. The method for providing a service according to claim 1, wherein the service is an emergency call service, and the network instruction is
an instruction of not establishing the session by using an Internet Protocol (IP) Multimedia Subsystem (IMS) CS Control Protocol (ICCP) signaling sent to the terminal after a Visit Mobile Switch Center (VMSC) judges, according to a type of the session request message and a number carried in the session request message initiated by the terminal, that an emergency call service needs to be provided and that a session request message is I1-CS.

7. The method for providing a service according to claim 1, wherein
the service is an emergency call service, and the network instruction is: a notification sent to the terminal that the call is an emergency call after a Visit Mobile Switch Center (VMSC) judges, according to a type of the session request message and a number carried in the session request message initiated by the terminal, that an emergency call service needs to be provided and that a session request message is I1-CS; and
the acquiring, by the terminal, the network instruction further comprises: determining, by the terminal, according to the instruction, not to establish the session by using an Internet Protocol (IP) Multimedia Subsystem (IMS) CS Control Protocol (ICCP) signaling.

8. The method for providing a service according to claim 1, wherein the service is an emergency call service, and the initiating the call in the CS comprises:
initiating, by the terminal, a call in the CS domain, wherein the call carries an emergency call identifier.

9. The method for providing a service according to claim 1, wherein the service is a monitoring service, and the method comprises:
sensing, by an Over-The-Air (OTA) server, that the terminal has performed location update, judging whether the terminal needs to be monitored, and delivering an instruction of not establishing a session by using an Internet Protocol (IP) Multimedia Subsystem (IMS) CS Control Protocol (ICCP) to the terminal;
initiating, by the terminal, a call in the CS domain according to the instruction; and
providing, by the CS domain, a monitoring service for the terminal after receiving the call from the terminal.

10. The method for providing a service according to claim 1, wherein when the service is a monitoring service, the network instruction is:
an instruction of not establishing a session by using an Internet Protocol (IP) Multimedia Subsystem (IMS) CS Control Protocol (ICCP) signaling sent to the terminal after a Proxy Call Session Control Function (P-CSCF) receives a session request message initiated by the terminal carrying user data and an identifier, judges, according to preset user controlled data and the user data carried in the session request message, that a monitoring service needs to be provided, and judges, according to the identifier, that a session request message is I1-packet switched (PS).

11. The method for providing a service according to claim 10, further comprising:
judging, by a Serving General packet radio service Support Node (SGSN), that an Access Point Name (APN) carried in a context activation request message initiated by the terminal is not a local APN, and converting the carriedAPN into a local APN.

12. The method for providing a service according to claim 1, wherein when the service is a monitoring service, and the network instruction is
an instruction of not establishing a session by using an Internet Protocol (IP) Multimedia Subsystem (IMS) CS Control Protocol (ICCP) signaling sent to the terminal after a Visit Mobile Switch Center (VMSC) receives a session request message, which is initiated by the terminal and carries user data, judges, according to preset user controlled data and the user data carried in the session request message, that a monitoring service needs to be provided, and judges, according to a type of the session request message, that a session request message is I1-CS.

13. The method for providing a service according to claim 10 or 12, wherein the user data comprises one or more of: a called number, a calling number, and a terminal identifier, and the preset user controlled data comprises any one or more of: a called number, a calling number, a terminal identifier, and location information.

14. The method for providing a service according to claim 4, 5 or 10, wherein the identifier is realized by setting I1-PS identifier or setting the Session Description Protocol (SDP) to null or setting an identifier carried by using CS.

15. A system for providing a service, comprising:
a delivery device, configured to deliver a network instruction to user equipment (UE);
the UE, configured to initiate a call to a device for providing a service in a Circuit Switched (CS) domain after acquiring the network instruction delivered by the delivery device; and
a device for providing a service, configured to provide a service after receiving the call from the UE.

16. The system for providing a service according to claim 15, wherein the delivery device is a Serving General packet radio service Support Node (SGSN), configured to send a context activation rejection message to the UE, after receiving a context activation request message sent by the UE and judging that an access point node (APN) carried in the context activation request message is a non-local APN.

17. The system for providing a service according to claim 15, wherein
the delivery device is an Over-The-Air (OTA) server, configured to deliver an emergency number of a current network where the UE is located to the UE, after sensing that the UE has performed location update; and
the UE is configured to save the emergency number of the current network delivered by the OTA server, acquire an input number of the user, judge, according to the save emergency number and the input number of the user, that an emergency call service needs to be provided, and initiate an emergency call for the device for providing a service in the CS domain.

18. The system for providing a service according to claim 15, wherein
the delivery device is an Over-The-Air (OTA) server, configured to sense whether the UE has performed location update, judge whether the UE needs to be monitored, and deliver an instruction of not establishing a session by using an Internet Protocol (IP) multimedia subsystem (IMS) CS control protocol (ICCP) to the UE; and
the UE is configured to receive the instruction delivered by the OTA server, and initiate a call in the CS domain after receiving the instruction.

19. The system for providing a service according to claim 15, wherein
the delivery device is a Proxy Call Session Control Function (P-CSCF), configured to send an instruction of not establishing a session by using an Internet Protocol (IP) multimedia subsystem (IMS) CS control protocol (ICCP) signaling to the UE after judging, according to a number and an identifier carried in a session request message initiated by the UE, that an emergency call service needs to be provided and that the session request message is I-1-packet switched (PS); and
the UE is configured to send the session request message carrying the number and the identifier to the P-CSCF, receive the instruction sent by the P-CSCF, and initiate an emergency call in the device for providing a service in the CS domain.

20. The system for providing a service according to claim 15, wherein
the delivery device is a Proxy Call Session Control Function (P-CSCF), configured to send a notification that the session is an emergency call to the terminal after judging, according to a number and a identifier carried in the session request message initiated by the UE, that an emergency call service needs to be provided and the session request message is I1-packet switched (PS); and
the UE is configured to send to the P-CSCF a session request message carrying the number and the identifier carrying the number and the identifier, receive the notification sent by the P-CSCF, determine not to establish the session by using an Internet Protocol (IP) Multimedia Subsystem (IMS) CS Control Protocol (ICCP) signaling, and initiate an emergency call in the device for providing a service in the CS domain.

21. The system for providing a service according to claim 15, wherein
the delivery device is a Proxy Call Session Control Function (P-CSCF), configured to send an instruction of not establishing a session by using an Internet Protocol (IP) multimedia subsystem (IMS) CS control protocol (ICCP) signaling to user equipment (UE) after receiving a session request message carrying user data and an identifier sent by the UE, and judging, according to preset user controlled data and the user data carried in the session request message, that a monitoring service needs to be provided, and judging, according to the identifier, that the session request message is I1-packet switched (PS).

22. The system for providing a service according to claim 15, wherein
the delivery device is a visit mobile switch center (VMSC), configured to send an instruction of not establishing a session by using an Internet Protocol (IP) multimedia subsystem (IMS) CS control protocol (ICCP) signaling to the terminal after receiving a session request message initiated by the UE, and judging, according to a type of the session request message and a number carried in the session request message, that an emergency call service needs to be provided and that the session request message is I1-CS; and
the UE is configured to send a session request message carrying a number to the VMSC, and initiate an emergency call to the device for providing a service in the CS domain after receiving the instruction sent by the VMSC.

23. The system for providing a service according to claim 15, wherein
the delivery device is a Visit Mobile Switch Center (VMSC), configured to receive a session request message sent by the UE, and send a notification that the session is an emergency call to the UE after judging, according to a type of the session request message and a number carried in the session request message, that an emergency call service needs to be provided and that the session request message is I1-CS; and
the UE is configured to send a session request message carrying a number to the VMSC, receive an instruction sent by the VMSC, determine not to establish the session by using an Internet Protocol (IP) multimedia subsystem (IMS) CS control protocol (ICCP) signaling, and initiate an emergency call in the device for providing a service in the CS domain.

24. The system for providing a service according to claim 15, wherein the delivery device is a Visit Mobile Switch Center (VMSC), configured to receive a session request message carrying user data sent by the UE, and send an instruction of not establishing a session by using an Internet Protocol (IP) multimedia subsystem (IMS) CS control protocol (ICCP) signaling to the UE after judging, according to preset user controlled data and the user data carried in the session request message, that a monitoring service needs to be provided, and judging, according to a type of the session request message, that the session request message is I1-CS.

25. A delivery device, configured to deliver a network instruction to user equipment (UE), enable the UE to initiate, after receiving the network instruction and according to the network instruction, a call to a device for providing a service in a Circuit Switched (CS) domain, and acquire a service provided by the device for providing a service after the device for providing a service receives the call.

26. The delivery device according to claim 25, wherein the delivery device is a Serving General packet radio service Support Node (SGSN), and the SGSN comprises:a first receiving module, configured to receive a context activation request message sent by the UE; and
a first processing module, configured to send a context activation rejection message to user equipment (UE) after judging that an Access Point Node (APN) carried in the context activation request message is a non-localAPN.

27. The delivery device according to claim 25, wherein the delivery device is an Over-The-Air (OTA) server, and
the OTA server comprises:
a second receiving module, configured to sense whether the UE has performed location update;
a second processing module, configured to deliver an emergency number of a network where the user equipment is currently located to the user equipment after the second receiving module senses that the UE has performed location update;
or,
the OTA server comprises:
a third receiving module, configured to sense whether the UE has performed location update; and
a third processing module, configured to deliver an instruction of not establishing a session by using an Internet Protocol (IP) multimedia subsystem (IMS) CS control protocol (ICCP) signaling to the UE after the third receiving module senses that the UE has performed location update and judges that the UE needs to be monitored.

28. The delivery device according to claim 25, wherein the delivery device is a Proxy Call Session Control Function (P-CSCF), and the P-CSCF comprises:
a fourth receiving module, configured to receive a session request message sent by the UE; and
a fourth processing module, configured to send an instruction of not establishing a session by using an Internet Protocol (IP) multimedia subsystem (IMS) CS control protocol (ICCP) signaling to the UE after judging, according to a number and an identifier carried in the session request message, that an emergency call service needs to be provided and that the session request message is I1-packet switched (PS);
or,
the P-CSCF comprises:
a fifth receiving module, configured to receive a session request message sent by the UE; and
a fifth processing module, configured to send a notification that the session is an emergency call to the UE after judging, according to a number and an identifier carried in the session request message, that an emergency call service needs to be provided and that the session request message is I1-PS;
or,
the P-CSCF comprises:
a sixth receiving module, configured to receive a session request message sent by the UE; and
a sixth processing module, configured to send an instruction of not establishing a session by using an Internet Protocol (IP) Multimedia Subsystem (IMS) CS control protocol (ICCP) signaling to the UE after judging, according to preset user controlled data and user data and an identifier carried in the session request message, that a monitoring service needs to be provided and that the session request message is I1-PS.

29. The delivery device according to claim 25, wherein the delivery device is a Visit Mobile Switch Center (VMSC), and the VMSC comprises:
a seventh receiving module, configured to receive a session request message sent by the UE; and
a seventh processing module, configured to send an instruction of not establishing a session by using an Internet Protocol (IP) multimedia subsystem (IMS) CS control protocol (ICCP) signaling to the UE after judging, according to a type of the session request message and a number carried in the session request message, that an emergency call service needs to be provided and that the session request message is I1-CS;
or,
the VMSC comprises:
an eighth receiving module, configured to receive a session request message sent by the UE; and
an eighth processing module, configured to send a notification that the session is an emergency call to the UE after judging, according to a type of the session request message an a number carried in the session request message, that an emergency call service needs to be provided and that the session request message is I1-CS;
or,
the VMSC comprises:
a ninth receiving module, configured to receive a session request message sent by the UE; and
a ninth processing module, configured to send an instruction of not establishing a session by using an ICCP signaling to the UE after judging, according to preset user controlled data and user data carried in the session request message, that a monitoring service needs to be provided, and judging, according to a type of the session request message, that the session request message is I1-CS.

30. A user equipment (UE), comprising:
an acquisition module, configured to acquire a network instruction; and
a processing module, configured to initiate a call in a circuit switched (CS) domain after the acquisition module acquires the network instruction.

31. The UE according to claim 30, wherein
the acquisition module of the UE is configured to acquire and save an emergency number of the network where the UE is currently located after an Over-The-Air (OTA) server senses that the UE has performed location update; and
the processing module is configured to acquire an input number of a user, and initiate an emergency call in the CS domain after the input number matches the emergency number saved by the acquisition module;
or,
the acquisition module is configured to receive and save an instruction of not establishing a session by using an Internet Protocol (IP) Multimedia Subsystem (IMS) CS Control Protocol (ICCP) signaling delivered by the OTA server; and
the processing module is configured to initiate a call in the CS domain according to the instruction received by the acquisition module;
or,
the acquisition module is configured to send a context activation request message carrying an Access Point Node (APN) to a Serving General packet radio service Support Node (SGSN), and acquire a context activation rejection message sent by the SGSN; and
the processing module is configured to initiate a call in the CS domain after the acquisition module acquires the context activation rejection message;
or,
the acquisition module is configured to send a session request message carrying a number and an identifier to a Proxy Call Session Control Function (P-CSCF), and acquire an instruction of not establishing a session by using an ICCP signaling sent by the P-CSCF; and
the processing module is configured to initiate an emergency call in the CS domain after the acquisition module acquires the instruction;
or,
the acquisition module is configured to send a session request message carrying a number and an identifier to a P-CSC, and acquire a notification that the session is an emergency call sent by the P-CSCF; and
the processing module is configured to determine not to establish a session by using an ICCP signaling and initiate an emergency call in the CS domain after the acquisition module acquires the notification;
or,
the acquisition module is configured to send a session request message carrying a number to a Visit Mobile Switch Center (VMSC), and acquire an instruction of not establishing a session by using an ICCP signaling sent by the VMSC; and
the processing module is configured to initiate an emergency call in the CS domain after the acquisition module acquires the instruction;
or,
the acquisition module is configured to send a session request message carrying a number to a VMSC, and acquire a notification that the session is an emergency call sent by the VMSC; and
the processing module is configured to determine not to establish a session by using an ICCP signaling and initiate an emergency call in the CS domain after the acquisition module acquires the notification;
or,
the acquisition module is configured to send a session request message carrying user data and an identifier to a P-CSCF, and acquire an instruction of not establishing a session by using an ICCP signaling sent by the P-CSCF, wherein the user data comprises one or more of: a called number, a calling number, a terminal identifier, and location information;
and
the processing module is configured to initiate a call in the CS domain after the acquisition module acquires the instruction;
or,
the acquisition module is configured to send a session request message carrying user data to a VMSC, and acquire an instruction of not establishing a session by using an ICCP signaling sent by the VMSC, wherein the user data comprises one or more of a called number, a calling number, a terminal identifier, and location information; and
the processing module is configured to initiate a call in the CS domain after the acquisition module acquires the instruction;
